# EUROPÄISCHE PATENTSCHRIFT

(11) **EP 2 937 127 B1**
(45) Veröffentlichungstag und Bekanntmachung des Hinweises auf die Patenterteilung: **27.03.2024**
(21) Anmeldenummer: 14165543.1
(22) Anmeldetag: 23.04.2014
(51) Int. Cl.: C02F 1/28, C02F 101/20, C02F 103/00, B01D 21/00, B01D 21/24, C02F 1/00, E03F 5/14, E03B 3/03

(54) **Einrichtung zum Behandeln von Niederschlagswasser**
Device for the treatment of precipitation water
Dispositif de traitement de l'eau de pluie

(43) Veröffentlichungstag der Anmeldung: 28.10.2015
(73) Patentinhaber: Otto Graf GmbH Kunststofferzeugnisse, 79331 Teningen (DE)
(72) Erfinder: Graf, Otto P., 79331 Teningen (DE)
(74) Vertreter: Grünecker Patent- und Rechtsanwälte PartG mbB

(56) Entgegenhaltungen:
- WO-A1-2014/005175
- CN-U- 202 359 609
- DE-U1- 20 117 974
- DE-U1- 20 117 974

## Beschreibung

Die Erfindung betrifft eine Einrichtung gemäß Oberbegriff des Patentanspruches 1.

Niederschlagswasser, z.B. Regenwasser, welches von metallischen Dachflächen oder Parkplätzen anfallend mit Schwermetallen oder Öl, Fett oder Treibstoffen verunreinigt ist, muss Vorschriften entsprechend, beispielsweise zum Einhalten von Grenzwerten nach Bodenschutzverordnungen oder ähnlichen, gereinigt werden. Üblich ist es bisher, ein Filtersubstrat einzusetzen, welches durch Adsorption bei Durchströmung Schadstoffe bindet. Dieses Filtersubstrat wird üblicherweise in einen separat installierten Schacht oder in eine Rinne eingebaut, wobei häufig auch eine Bodenmulde zum Absetzen von Feinstpartikeln durch Sedimentation und Rückhalten gelöster Stoffe in einer belebten Bodenschicht vorgesehen wird. Auf diese Weise gereinigtes Niederschlagswasser kann in eine Versickerungsstruktur geleitet werden, oder wird auf andere Weise entsorgt. Der bauliche Aufwand und Platzbedarf solcher Einrichtungen ist unzweckmäßig groß. Ein wichtiger Gesichtspunkt besteht ferner darin, dass das Filtersubstrat zeitweise "trocken fallen" soll, um eine Rücklösung bereits adsorbierter Schwermetalle zu vermeiden oder zumindest zu verringern.

Bei der aus DE 201 17 974 U1 bekannten Einrichtung ist auf dem topfförmigen, betonierten Erdtank oberseitig das topfförmig ausgebildete Filtergehäuse mit dem Außendurchmesser des Erdtanks entsprechendem Außendurchmesser aufgesetzt, wobei der obere offene Rand des Filtergehäuses in einer Bodenmulde platziert ist. Das Filtergehäuse weist eine durch einen zentralen Schacht begrenzte, mit einer Filterschicht befüllte Ringkammer mit Durchlauföffnungen auf. Im Bodenbereich des Erdtanks ist ein zentrales Standrohr auf eine Bodenöffnung gesetzt.

Bei der aus WO 2014/005175 A1 bekannten Einrichtung ist ein betonierter, zweiteiliger Erdtank zulaufseitig in der horizontalen Teilungsebene des Erdtanks mit einem Filtergehäuse ausgestattet, das einen primären Filter mit Filterplatten und einen sekundären Filter mit Patronen enthält, die zulaufseitig beziehungsweise überlaufseitig durchströmt werden. Das Filtergehäuse umfasst mehrere durch dazwischenliegende Deflektoren getrennte Sektoren.

Bei der aus CN 202359 609 U bekannten Einrichtung weist der zylindrische und liegend eingebaute Erdtank einen Tankdom mit Zulauf und Überlauf auf, wobei direkt im Tankdom eine Filterschicht querliegend verbaut ist.

Der Erfindung liegt die Aufgabe zugrunde, eine Einrichtung der eingangs genannten Art anzugeben, die baulich einfach ist, wenig Platz benötigt, und bei Bedarf sogar eine Brauchwassernutzung, z.B. zur Bewässerung, ermöglicht.

Die gestellte Aufgabe wird mit den Merkmalen des Patentanspruches 1 gelöst.

Der platzsparend untergebrachte Erdtank definiert wenigstens einen Sedimentationsraum für das im Erdtank angeordnete Filtersubstrat und erlaubt das Absetzen von Feinstpartikeln durch Sedimentation und Rückhalten gelöster Stoffe, wobei das Filtersubstrat zumindest Schwermetalle adsorbiert, ehe das Niederschlagswasser in gereinigtem Zustand abgeführt wird. Auf diese Weise wird eine Bodenmulde und/oder ein Schacht eingespart, und kann sogar ein "Trockenfallen" des Filtersubstrats gewährleistet werden. Falls der Erdtank nur oder zusätzlich einen untenliegenden Zulauf haben sollte, kann im Erdtank dem Filtersubstrat ein Alternativ-Sedimentationsraum zugeordnet sein.

Das Filtersubstrat ist als zumindest eine, vorzugsweise mehrere, quer zur Durchströmrichtung orientierte Feinfilterstufen definierende Schichten gleicher oder unterschiedlicher Körnungen oder gleicher oder unterschiedlicher Adsorptionsmaterialien mit der Grobfilterstufe in dem Filtergehäuse untergebracht, das in einem Tankdom des Erdtanks in etwa vertikal verbaut ist. Durch diese Platzierung des Filtergehäuses mit dem Filtersubstrat wird die Speicherkapazität des Erdtanks, beispielsweise zur Regenwassernutzung, nicht beschränkt, kann das Filtersubstrat "trocken fallen", und sind Wartungen bequem durchführbar.

Das Filtergehäuse ist im Wesentlichen topfartig ausgebildet. Es weist einen oberseitigen Ringteil mit wenigstens einem außenliegenden Zulaufstutzen, unter dem Ringteil eine Kammer für die Grobfilterstufe, vorzugsweise eine Kammer mit wenigstens einem außenliegenden Notüberlauf-Stutzen zum Inneren des Erdtanks, unter der Kammer wenigstens eine Aufnahmekammer, für mindestens eine Schicht des Filtersubstrats, und darunter einen Auffangtrichter mit einem Anschlussstutzen, vorzugsweise für ein Standrohr, auf. Das Filtergehäuse ist stabil und kompakt und lässt sich bequem im Tankdombereich des Erdtanks installieren, leicht warten, und/oder ein- und ausbauen.

Zweckmäßig ist das Filtersubstrat im Filtergehäuse in ein mehrstufiges Filtersystem mit wenigstens einer zuströmseitigen Grobfilterstufe, vorzugsweise einem Siebkorb, eingegliedert. Innerhalb des Erdtanks werden somit grobe Verunreinigungen im Siebkorb aufgefangen, werden Schwermetalle und dgl. vom Filtersubstrat adsorbiert, und findet eine wirksame Sedimentation im Erdtank statt.

Zweckmäßig ist das Filtersubstrat so im Erdtank platziert, dass es zulaufseitig von oben nach unten oder im Wesentlichen horizontal durchströmt wird. Bei Unterschreiten eines vorbestimmten Wasserstandes, z.B. nach Entnahme von Brauchwasser, kann es trocken fallen. Auch das Brauchwasser ist gereinigt.

Zweckmäßig ist der Überlauf des Erdtanks an ein Erd-Versickerungssystem angeschlossen, das mit durch das Filtersubstrat behandeltem Niederschlagswasser gespeist wird. Alternativ kann das gereinigte Niederschlagswasser auf andere Weise entsorgt oder genutzt werden.

Besonders zweckmäßig weist der Erdtank einen beruhigten Zulauf mit eingestauter Wassersäule auf. Dadurch wird die Strömungsgeschwindigkeit durch Aufprall anfallenden Niederschlagswassers auf eine Wasserstausäule so verändert bzw. verringert, dass eine Reaktivierung bereits abgesetzter Stoffe im Schlammspeicher vermieden wird. Es wird praktisch der gesamte Innenraum des Erdtanks als Sedimentationsraum genutzt werden. Bevorzugt umfasst der beruhigte Zulauf ein Standrohr zwischen dem Filtergehäuse und dem Bodenbereich des Erdtanks, in dem die Wassersäule steht.

Weiterhin ist es zweckmäßig, wenn der Überlauf im Erdtank eine Ablaufschikane aufweist, die zur finalen Reinigung das gereinigte Wasser aus der besten Wasserschicht mit bester Qualität ablaufen lässt, und eine eventuell vorhandene Schwimmschicht zurückhält.

Für die Ablaufschikane können unterschiedliche Versionen zweckmäßig sein. Bei einer Version ist in eine Seitenwand des Erdtanks ein Überlauf-Siphon eingesetzt, der einlaufseitig und mit einem aus dem Erdtank geführten Ablaufrohr einen vorbestimmten Wasserstand beispielsweise etwa auf der Höhe der Unterseite des oder knapp unterhalb des Filtersubstrats definiert. Alternativ könnte zu duesem Zweck ein T-Rohr verwendet werden. In einem anderen Fall ist im Tankdom ein nach oben offenes Rohrknie, z. B. ein 45°-Rohrknie, montiert, das mit einem aus dem Erdtank geführten Ablaufrohr einen maximalen Wasserstand in etwa auf der Höhe der Oberseite des Filtersubstrats definiert. In diesem Fall kann zum Trockenfallen des Filtersubstrats der Wasserstand durch Entnahme aus dem Erdtank abgesenkt werden. Im ersten Fall ist nicht unbedingt eine Regenwassernutzung aus dem Erdtank notwendig, um das Filtersubstrat trocken fallen zu lassen, da über das Überlaufrohr der Wasserspiegel selbsttätig entsprechend weit abgesenkt werden kann.

Um den Zulauf in den Sedimentationsraum noch weiter zu beruhigen, kann es zweckmäßig sein, wenn das Standrohr nahe dem Bodenbereich des Erdtanks in ein zumindest einendig offenes Querrohr eingesteckt ist, dessen Länge, vorzugsweise, etwa dem Außendurchmesser des Gehäuses entsprechen kann, oder in einen Zulauftopf. So ist in diesem Bereich eine umlenkende Beruhigungsvorrichtung eingegliedert. Hierbei wird durch Strömungsberuhigung eine Reaktivierung bereits abgesetzter Feinstoffe noch besser vermieden.

Zweckmäßig ist jede Schicht des Filtersubstrats als gefüllter und durchlässiger Filtersack ausgebildet, der einfach einsetzbar und entnehmbar und gegebenenfalls reinigbar ist. Um die Handhabung der Filterschicht zu vereinfachen, kann die Filterschicht aus einzeln zu manipulierenden Sektoren nach Art von Kuchenstücken, jeweils eines in einem Sack, zusammengesetzt sein.

Zweckmäßig sind zumindest der Erdtank und das Filtergehäuse Kunststoff-Formteile.

Anhand der Zeichnungen werden Ausführungsformen des Erfindungsgegenstandes erläutert. Es zeigen:
- Fig. 1: einen Längsschnitt einer Einrichtung zum Behandeln von Niederschlagswasser,
- Fig. 2: einen Querschnitt einer anderen Ausführungsform einer solchen Einrichtung,
- Fig. 3: eine Explosionsdarstellung eines mehrstufigen Filtersystems, und
- Fig. 4: eine schematische Vertikalschnittdarstellung einer anderen Ausführungsform eines mehrstufigen Filtersystems.

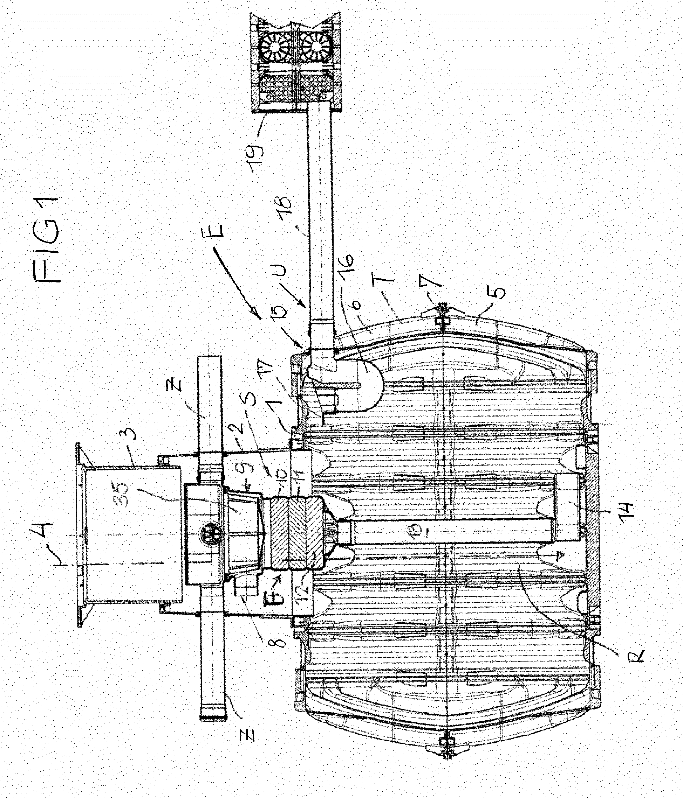

Fig. 1 verdeutlicht eine Einrichtung E zum Behandeln zumindest von mit Schwermetallen kontaminiertem Niederschlagswasser. Die Einrichtung ist in der Ausführungsform in Fig. 1 beispielsweise an eine Versickerungsstruktur 19 angeschlossen (optional), könnte jedoch auch an das Kanalisationssystem oder an eine andere Entsorgungsstruktur angeschlossen werden. Hauptkomponenten der Einrichtung sind ein Erdtank T, zweckmäßig ein Kunststofftank, sowie ein mehrstufiges Filtersystem F, wenigstens ein Zulauf Z, sowie wenigstens ein Überlauf U, an welche der Erdtank T angeschlossen ist. Der Zulauf Z liegt hier oben. Es könnte der Zulauf Z oder ein weiterer Zulauf (nicht gezeigt) auch unten zum Erdtank T führen.

Das mehrstufige Filtersystem F enthält in einem Gehäuse zulaufseitig eine Grobfilterstufe, wie einen Siebkorb 35, und ein Filtersubstrat S, beispielsweise mehrere Schichten 10, 11, 12 mit Zeolithen und/oder Eisenoxiden und/oder Eisenhydroxiden und/oder Steinen und/oder einem verwandten Material, das zumindest Schwermetalle durch Adsorption zu binden vermag, gegebenenfalls aber auch Öl, Fett, Treibstoffe oder dgl.. Der Erdtank T bildet ferner einen primär dem Filtersubstrat S zugeordneten Sedimentationsraum R, in welchem sich Feinstpartikel durch Sedimentation absetzen. Bei untenliegendem Zulauf Z könnte ein dem Filtersubstrat S zugeordneter Alternativ-Sedimentationsraum (nicht gezeigt) z.B. entfernt vom Zulauf vorgesehen sein.

Der Erdtank T weist oberseitig eine Öffnung 1 auf, in der ein Tankdom aus Aufsatzteilen 2, 3 abgedichtet montiert ist, dessen Oberseite beispielsweise bündig mit dem Erdboden liegt. Der Erdtank T ist zweckmäßig ein Kunststofftank mit allseitigen Verrippungen und kann, falls zusätzlich eine Regenwassernutzung gewünscht wird, einen Entnahmestrang 4 haben, über welchen beispielsweise Brauchwasser, gegebenenfalls zur Bodenbewässerung, relativ tief aus dem Erdtank nach außen z. B. gepumpt an einem nicht gezeigten Anschluss entnommen werden kann. Der Entnahmestrang 4 ist eine Option, die nicht unbedingt erforderlich ist.

In der gezeigten Ausführungsform besteht der Erdtank T aus zwei Halbschalen 5, 6, die entweder über Spannelemente 7 dicht miteinander verbunden sind oder (nicht gezeigt) miteinander verschweißt sind. Der Erdtank T könnte auch insgesamt monolithisch und einstückig ausgebildet sein.

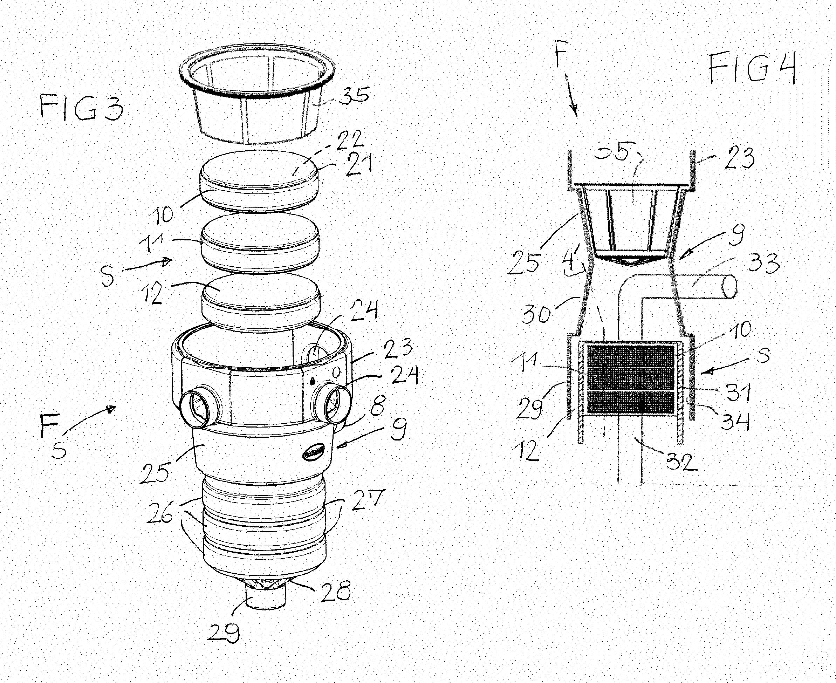

Das in Fig. 1 gezeigte Filtergehäuse 9 ist im Detail aus Fig. 3 zu entnehmen und im Tankdom 2, 3 vertikal installiert. Das Filtergehäuse 9 besitzt einen oberen Ringkörper 23 (Fig. 3) mit zumindest einem außenseitigen seitlichen Zulaufstutzen 24, im gezeigten Ausführungsbeispiel drei in Umfangsrichtung verteilten Zulaufstutzen 24. Der Ringteil 23 hat einen Innendurchmesser, der das bequeme Einsetzen der Schichten 10, 11, 12 und des Siebkorbs 35 ermöglicht. Unterhalb des Ringteils 23 ist eine z.B. leicht konische Kammer 25 vorgesehen, die, vorzugsweise, wenigstens einen seitlichen Notüberlauf-Stutzen 8 nach außen zum Inneren des Erdtanks T. In die Kammer 25 wird der Siebkorb 35 eingebracht. Unter der Kammer 25 ist eine Aufnahmekammer 26, beispielsweise mit Einschnürungen 27, geformt. Darunter ist ein Auffangtrichter 28 geformt, an dem ein vertikaler Anschlussstutzen 29 geformt ist. Das Filtergehäuse 9 ist zweckmäßig einstückig als Kunststoff-Formteil ausgebildet. In die Aufnahmekammer 26 werden die Schichten 10, 11, 12 nacheinander eingesetzt und so festgelegt, dass sie im Wesentlichen quer zur Durchströmrichtung orientiert sind. Jede Schicht 10, 11, 12 kann ein durchlässiger Filtersack 21 aus zweckmäßigem Material sein, in welchem das zumindest Schwermetalle adsorbierende Material 22 in dichter Schüttung enthalten ist. Alternativ kann jede Schicht 10, 11, 12 aus einzeln handhabbaren Sektoren zusammengesetzt sein, etwa nach Art von Kuchenstücken.

Der Zulauf Z des Erdtanks T ist hier strömungsberuhigt, dadurch, dass das zulaufende Niederschlagswasser in dem großbemessenen Ringteil 23 zirkulieren kann, und auf eine angestaute Wassersäule in einem vom Filtergehäuse 9 zum Bodenbereich des Erdtanks T führenden Standrohr 13 trifft. Das Standrohr 13 kann im Bodenbereich an ein querverlaufendes Rohrstück 14 oder einen Zulauftopf angeschlossen, z.B. dort eingesteckt sein. Das Rohrstück 14 ist zumindest an einem Ende offen und hat eine Länge, die in etwa dem Durchmesser des Filtergehäuses 9 entsprechen kann. Dies resultiert in einer umlenkenden Beruhigungsvorrichtung.

Ferner ist in der Ausführungsform in Fig. 1 eine Überlaufschikane 15 vorgesehen, die zur finalen Reinigung den Abzug von gereinigtem Niederschlagswasser aus der hierfür am besten geeigneten Wasserschicht sicherstellt und eine gegebenenfalls vorhandene Schwimmschicht zurückhält. In der Ausführungsform in Fig. 1 ist die Ablaufschikane ein in einer Seitenwand des Erdtanks montierter Überlauf-Siphon 16 (oder ein nicht gezeigtes T-Rohr), an den ein Überlaufrohr 18 angeschlossen ist, wobei der Einlauf des Siphons 16 einen maximalen Wasserstand 17 definiert, der bei oder unterhalb der Unterseite der untersten Schicht 12 des Filtersubstrats S liegt, so dass das Filtersubstrat dennoch trocken fallen kann, falls der Entnahmestrang 4 nicht vorgesehen sein sollte und dort kein Brauchwasser zur Regenwassernutzung entnommen wird.

Bei einer nicht gezeigten Ausführungsform könnte das Filtersubstrat S im Dauerstaubetrieb durchströmt werden, und zwar entweder von oben nach unten oder von unten nach oben oder sogar im Wesentlichen horizontal.

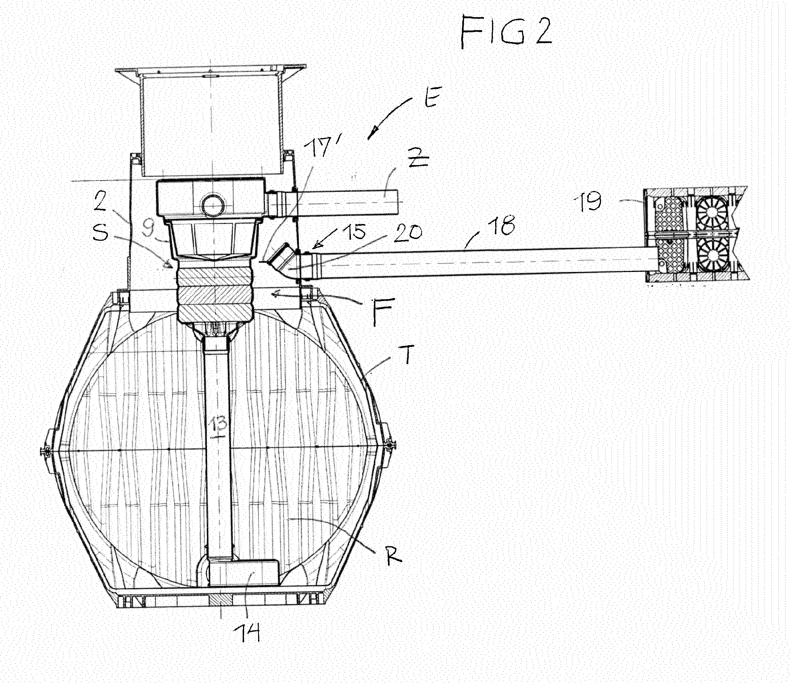

Die Ausführungsform der Einrichtung E in Fig. 2 unterscheidet sich von der der Ausführungsform der Fig. 1 dadurch, dass die Überlaufschikane 15 einen höheren maximalen Wasserstand 17' definiert, und zwar durch ein Rohrknie 20, das im Tankdom seitlich montiert ist, und an das sich das Überlaufrohr 18, beispielsweise zur Versickerungsstruktur 19, anschließt. Falls in dieser Ausführungsform kein Entnahmestrang 4, wie in Fig. 1 angedeutet, vorgesehen sein sollte, d.h. keine Brauchwassernutzung beabsichtigt ist, wird in diesem Fall das Filtersubstrat S im Dauerstaubetrieb eingesetzt.

In der gezeigten Ausführungsform in der Fig. 1 und 2 hat der Erdtank T die Gestalt eines liegenden Kreiszylinders mit bombierten Enden und waagrechter Zylinderachse. Es sind jedoch beliebige andere Ausführungsformen von Erdtanks T mit anderen geometrischen Gestalten und auch aus anderen Materialien genauso verwendbar.

Fig. 4 verdeutlicht schematisch ein mehrstufiges Filtersystem F, z. B. mit dem Siebkorb 35 als zulaufseitige Grobfilterstufe und dem Filtersubstrat S aus den Schichten 10, 11, 12. In den Schichten können unterschiedliche Körnungen und/oder Materialkombinationen vorgesehen sein. Die Anzahl der Schichten kann auch größer oder kleiner als drei sein. In dem Filtergehäuse 9 der Fig. 4 wird das Filtersubstrat S von unten nach oben zumindest zum Überlauf durchströmt, um z. B. Schwermetalle durch Adsorption zu binden. An die Kammer 25 zur Aufnahme des Siebkorbs 35 schließt sich hier z. B. ein freies, sich nach unten konisch erweiterndes Rohrstück 30 an, das mit dem Anschlussstutzen 29, beispielsweise für das Standrohr 13 der Fig. 1 und 2, verbunden ist. Das Filtersubstrat S ist in einen Topf 31 eingebracht, der oberseitig verschlossen und unten offen ist und im oder beim Anschlussstutzen 29 festgelegt wird. Der Außendurchmesser des Topfes 31 ist hier kleiner als der Innendurchmesser des Anschlussstutzens 29, so dass über den Zwischenraum 34 zulaufendes Niederschlagswasser nach Passieren des Siebkorbs 35 in das Standrohr 13 und durch dieses zum Bodenbereich geführt und beruhigt zum Sedimentationsraum R geführt wird. Zum Topf 31 führt z. B. von unten ein Rohr 32. Von der Oberseite des Topfes 31 erstreckt sich seitlich ein Knierohr 33 aus dem Filtergehäuse 9 und weiter beispielsweise zum Überlaufrohr 18. Hierbei wird zulaufendes Niederschlagswasser nach Durchgang durch den Siebkorb 35 zunächst in den Sedimentationsraum R gebracht, wo Feinstpartikel durch Sedimentation abgesetzt werden, so dass das Filtersubstrat S durch Feinstpartikel nur noch verschwindend belastet wird. Das Rohr 32, das beispielsweise etwa in halber Höhe des Erdtanks T endet, leitet somit der Feinstpartikel entledigtes Niederschlagswasser von unten in das Filtersubstrat S, von wo es durch das Knierohr 33 nach außen und aus dem Erdtank abläuft und dabei gereinigt wird. Das Filtersubstrat S separiert die Rohre 32, 33. Das Rohr 32 könnte sogar entfallen.

Die Qualität des im Sedimentationsraum bzw. Erdtank T enthaltenen Niederschlagswasser ist hierbei etwas minderer als in der Ausführungsform der Fig. 1 und 2, da nur tatsächlich über das Knierohr 33 ablaufendes Niederschlagswasser im Filtersubstrat S gereinigt wird. Um diesen Nachteil zu vermeiden, kann als Option gegebenenfalls der Entnahmestrang 4' nicht wie in Fig. 1 am Filtergehäuse 9 vorbei sondern gegebenenfalls ebenfalls über das Filtersubstrat S geführt und von diesem unterbrochen werden.

## Patentansprüche

1. Einrichtung (E) zum Behandeln von kontaminiertem Niederschlagswasser mit einem adsorbierenden Filtersubstrat (S), das in einem Filtergehäuse (9) untergebracht und in einem einen dem Filtersubstrat (S) zugeordneten Sedimentationsraum bildenden, wenigstens einen Zulauf (Z) aufweisenden Erdtank (T) angeordnet ist, aus welchem Erdtank (T) sich wenigstens ein Entnahmestrang (4, 4') und/oder Überlauf (U) heraus erstreckt, **dadurch gekennzeichnet, dass** in dem in einem Tankdom (1, 2, 3) des Erdtanks (T) in etwa vertikal verbauten Filtergehäuse (9) zusammen mit einer Grobfilterstufe das Filtersubstrat (S) als zumindest eine quer zur Durchströmrichtung orientierte, eine jeweilige Feinfilterstufe definierende Schicht (10, 11, 12) eines körnigen Filtermaterials untergebracht ist, dass das Filtergehäuse (9) im Wesentlichen topfartig ausgebildet ist, einen oberseitigen Ringteil (23) mit wenigstens einem außenliegenden Zulaufstutzen (24), unter dem Ringteil (23) eine Kammer (25) für die Grobfilterstufe, unter der Kammer (25) wenigstens eine Aufnahmekammer (26) für die mindestens eine Schicht (10, 11, 12) und darunter einen Auffangtrichter (28) mit einem nach unten offenen Anschlussstutzen (29) aufweist, und wobei das Filtersubstrat (S) mit dem Filtergehäuse (9) so platziert ist, dass das Filtersubstrat (S) vom Niederschlagswasser zulaufseitig durchströmt wird.

2. Einrichtung nach Anspruch 1, **dadurch gekennzeichnet, dass** im Filtergehäuse (9) das Filtersubstrat in ein mehrstufiges Filtersystem (F) mit wenigstens einem als zuströmseitige Grobfilterfilterstufe ausgebildeten Siebkorb (35) eingegliedert ist.

3. Einrichtung nach Anspruch 1, **dadurch gekennzeichnet, dass** das Filtersubstrat (S) im Erdtank (T) von oben nach unten durchströmt wird und so im Zulauf (Z) platziert ist, dass das Filtersubstrat ab Unterschreiten eines vorbestimmten Wasserstands im Erdtank (T) trocken fällt.

4. Einrichtung nach wenigstens einem der vorhergehenden Ansprüche, **dadurch gekennzeichnet, dass** der Überlauf (U) des Erdtanks (T) an ein Erd-Versickerungssystem (19) angeschlossen ist.

5. Einrichtung nach wenigstens einem der vorhergehenden Ansprüche, **dadurch gekennzeichnet, dass** der Erdtank (T) einen beruhigten Zulauf (Z) mit eingestauter Wassersäule aufweist.

6. Einrichtung nach wenigstens einem der vorhergehenden Ansprüche, **dadurch gekennzeichnet, dass** der Überlauf (U) in dem Erdtank (T) eine Ablaufschikane (15) aufweist, die entweder in etwa auf der Höhe der Unterseite des Filtersubstrats (S) einen in eine Seitenwand des Erdtanks (T) eingesetzten Überlauf-Siphon (16) umfasst, der mit einem aus dem Erdtank (T) geführten Überlaufrohr (18) einen maximalen Wasserstand (17) in etwa auf der Höhe der Unterseite des Filtersubstrats (S) definiert, oder im Tankdom (1, 2, 3) ein nach oben offenes Rohrknie (20) aufweist, das mit einem aus dem Erdtank (T) geführten Überlaufrohr (18) einen maximalen Wasserstand (17') in etwa auf der Höhe der Oberseite des Filtersubstrats (S) definiert.

7. Einrichtung nach wenigstens einem der vorhergehenden Ansprüche, **dadurch gekennzeichnet, dass** das Filtersubstrat (S) mehrere Feinfilterstufen definierende Schichten (11, 12, 10) gleicher oder unterschiedlicher Körnungen oder Filtermaterialien umfasst.

8. Einrichtung nach Anspruch 1, **dadurch gekennzeichnet, dass** ein Standrohr (13) nahe dem Bodenbereich des Erdtanks (T) zu einer umlenkenden Beruhigungsvorrichtung führt.

9. Einrichtung nach Anspruch 8, **dadurch gekennzeichnet, dass** die Beruhigungsvorrichtung ein zumindest einendig offenes Querrohr (14) ist, dessen Länge, vorzugsweise, etwa dem Außendurchmesser des Filtergehäuses (9) entspricht, oder ein Zulauftopf ist.

10. Einrichtung nach wenigstens einem der vorhergehenden Ansprüche, **dadurch gekennzeichnet, dass** jede Schicht (10, 11, 12) des Filtersubstrats (S) ein mit dem Filtermaterial gefüllter durchlässiger Filtersack (21) oder aus mehreren sektorenartigen Filtersäcken zusammengesetzt ist.

11. Einrichtung nach wenigstens einem der vorhergehenden Ansprüche, **dadurch gekennzeichnet, dass** der Erdtank (T) und das Filtergehäuse (9) Kunststoff-Formteile sind.

## Claims

1. Installation (E) for treating contaminated precipitation water with an adsorbing filter substrate (S) contained in a filter housing (9) arranged in an underground tank (T) forming a sedimentation chamber allocated to the filter substrate (S) and having at least one intake (Z), out of which underground tank (T) at least an extraction string (4, 4') and/or an overflow pipe (U) extends, **characterized in that** in the filter housing (9) installed approximately vertically in a tank dome (1, 2, 3) of the underground tank (T) at least one layer (10, 11, 12) of a granular filter material is contained and oriented crosswise to the through flow direction to define a respective fine filter stage, the layer (10, 11, 12) defining the filter substrate (S) together with a coarse filter stage, that the filter housing (9) is substantially pot shaped, is provided with an upper ring part (23) having at least one exterior intake socket piece (24), underneath the ring part (23) a chamber (25) for the coarse filter stage and has underneath the chamber (25) at least one accommodating chamber (26) for the at least one layer (10, 11, 12) and underneath of the accommodating chamber (26) a catching funnel (28) including a connecting socket part (29) being open at the lower side, and wherein the filter substrate (S) is placed by its accommodation in the filter housing (9) such that the filter substrate (S) is flown through by the precipitation water from the intake side.

2. Installation according to claim 1, **characterized in that** in the filter housing (9) the filter substrate is incorporated into a multi-stage filter system (F) having at least one sieve basket (35) defining the coarse filter stage at the intake side.

3. Installation according to claim 1, **characterized in that** the filter substrate (S) within the underground tank (T) is flown through from above to downwards and is placed such in the intake (Z) that the filter substrate falls dry when the water level in the underground tank (T) falls below a predetermined water level.

4. Installation according to at least one of the preceding claims, **characterized in that** the overflow pipe (U) of the underground tank (T) is connected to an underground-percolation system (19).

5. Installation according to at least one of the preceding claims, **characterized in that** the underground tank (T) has a steadied intake (Z) including a stemming head of water.

6. Installation according to at least one of the preceding claims, **characterized in that** the overflow pipe (U) in the underground tank (T) is provided with a draining baffle (15) including either an overflow-siphon (16) substantially at the elevation of the underside of the filter substrate (S), the draining baffle (15) being inserted into a side wall of the underground tank (T), the overflow-siphon (16) defining in coaction with an overflow-pipe (18) extending out of the underground tank (T) a maximum water level (17) substantially at the elevation of the underside of the filter substrate (S), or including an upwardly open knee tube (20) arranged in the tank dome (1, 2, 3), the knee tube defining a maximum water level (17') substantially at the elevation of the upper side of the filter substrate.

7. Installation according to at least one of the preceding claims, **characterized in that** the filter substrate (S) comprises several fine filter stages defining layers (11, 12, 10) of equal or different coarseness or of different filter materials.

8. Installation according to claim 1, **characterized in that** a standpipe (13) extends close to the bottom portion of the underground tank (T) to a deflecting steadying device.

9. Installation according to claim 8, **characterized in that** the steadying device is a lateral pipe open at least at one end, the length of which, preferably, corresponds substantially to the outer diameter of the filter housing (9), or that the steadying device is an intake pot.

10. Installation according to at least one of the preceding claims, **characterized in that** each layer (10, 11, 12) of the filter substrate (S) is a permeable filter bag (21) filled with the filter material, or is combined of several sector shaped filter bags.

11. Installation according to at least one of the preceding claims, **characterized in that** the underground tank (T) and the filter housing (9) are plastic material parts.

## Revendications

1. Dispositif (E) pour traiter les eaux de précipitation contaminées avec un substrat filtrant adsorbant (S) qui est logé dans un boîtier de filtre (9) et agencé dans un réservoir enterré (T) qui forme une chambre de sédimentation associée au substrat filtrant (S) et comporte au moins une entrée (Z), au moins une ligne de prélèvement (4, 4') et/ou un trop-plein (U) s'étendant dudit réservoir enterré (T) vers l'extérieur, **caractérisé en ce que** dans le boîtier de filtre (9) installé approximativement verticalement dans un dôme de réservoir (1, 2, 3) du réservoir enterré (T) conjointement à un étage de filtration grossière, le substrat filtrant (S) est agencé sous la forme d'au moins une couche (10, 11, 12) d'un matériau filtrant granulaire orienté transversalement au sens d'écoulement et définissant un étage de filtration fine respectif, **en ce que** le boîtier de filtre (9) est essentiellement en forme de pot, comporte une partie annulaire de face supérieure (23) avec au moins un raccord d'entrée externe (24), sous la partie annulaire (23) une chambre (25) pour l'étage de filtration grossière, sous la chambre (25) au moins une chambre de réception (26) pour ladite au moins une couche (10, 11, 12), et au-dessous un entonnoir collecteur (28) avec un raccord de connexion (29) ouvert vers le bas, et dans lequel le substrat filtrant (S) est placé avec le boîtier de filtre (9) de telle sorte que le substrat filtrant (S) est traversé par les eaux de précipitation côté entrée.

2. Dispositif selon la revendication 1, **caractérisé en ce que**, dans le boîtier de filtre (9), le substrat filtrant est intégré dans un système filtrant (F) à plusieurs étages avec au moins un panier tamis (35) conçu comme un étage de filtration grossière côté admission.

3. Dispositif selon la revendication 1, **caractérisé en ce que** le substrat filtrant (S) présent dans le réservoir enterré (T) est traversé de haut en bas et est placé dans l'entrée (Z) de telle manière que le substrat filtrant s'assèche en dessous d'un niveau d'eau prédéterminé dans le réservoir enterré (T).

4. Dispositif selon au moins l'une des revendications précédentes, **caractérisé en ce que** le trop-plein (U) du réservoir enterré (T) est connecté à un système d'infiltration enterré (19).

5. Dispositif selon au moins l'une des revendications précédentes, **caractérisé en ce que** le réservoir enterré (T) comporte une entrée apaisée (Z) avec une colonne d'eau retenue.

6. Dispositif selon au moins l'une des revendications précédentes, **caractérisé en ce que** le trop-plein (U) dans le réservoir enterré (T) présente une chicane d'évacuation (15) qui soit comporte, approximativement à hauteur de la face inférieure du substrat filtrant (S), un siphon de trop-plein (16) inséré dans une paroi latérale du réservoir enterré (T) qui, avec un tuyau de trop-plein (18) sortant du réservoir enterré (T), définit un niveau d'eau maximal (17) approximativement à hauteur de la face inférieure du substrat filtrant (S), soit comporte, dans le dôme du réservoir (1, 2, 3), un coude de tuyau (20) ouvert vers le haut qui, avec un tuyau de trop-plein (18) partant du réservoir enterré (T), définit un niveau d'eau maximum (17') approximativement à hauteur de la face supérieure du substrat filtrant (S).

7. Dispositif selon au moins l'une des revendications précédentes, **caractérisé en ce que** le substrat filtrant (S) comporte plusieurs couches (11, 12, 10) de granulométries ou de matériaux filtrants identiques ou différents définissant des étages de filtration fine.

8. Dispositif selon la revendication 1, **caractérisé en ce qu'**un tuyau vertical (13) à proximité de la partie inférieure du réservoir enterré (T) mène à un dispositif d'apaisement en dérivation.

9. Dispositif selon la revendication 8, **caractérisé en ce que** le dispositif d'apaisement est un tuyau transversal (14) ouvert à au moins une extrémité, dont la longueur correspond de préférence approximativement au diamètre extérieur du boîtier de filtre (9), ou est un pot d'entrée.

10. Dispositif selon au moins l'une des revendications précédentes, **caractérisé en ce que** chaque couche (10, 11, 12) du substrat filtrant (S) est un sac filtrant perméable (21) rempli du matériau filtrant ou composé de plusieurs sacs filtrants en forme de secteur.

11. Dispositif selon au moins l'une des revendications précédentes, **caractérisé en ce que** le réservoir enterré (T) et le boîtier de filtre (9) sont des pièces moulées en matière plastique.
